# EUROPÄISCHE PATENTSCHRIFT

(11) **EP 2 143 616 B1**
(45) Veröffentlichungstag und Bekanntmachung des Hinweises auf die Patenterteilung: **25.07.2012**
(21) Anmeldenummer: 09008388.2
(22) Anmeldetag: 26.06.2009
(51) Int. Cl.: B62B 13/14, B62B 17/08

(54) **Schlitten**
Sled
Luge

(30) Priorität: 11.07.2008 DE 102008032811
(43) Veröffentlichungstag der Anmeldung: 13.01.2010
(73) Patentinhaber: Wagner, Sven, 22081 Hamburg (DE)
(72) Erfinder: Wagner, Sven, 22081 Hamburg (DE)
(74) Vertreter: Groth, Wieland

(56) Entgegenhaltungen:
- EP-A2- 0 370 545
- DE-A1- 2 636 323
- GB-A- 191 008 832
- US-A- 3 519 284
- US-B1- 6 241 265

## Beschreibung

Die Erfindung betrifft einen Schlitten nach dem Oberbegriff des Anspruchs 1, wie von der DE 26 36 323 A1 oder der US 3,519,284 A gezeigt.

Aus der US 6,241,265 81 ist ein vierkufiger Schlitten für einen Fahrer bekannt. Der Schlitten weist eine Lenkstange auf, an deren Griffen jeweils eine Handbremse vorgesehen ist. Jede der beiden Handbremse steuert Ober einen Seilzug einen Metallhebei, der eich beim Bremsen in den Schnee gräbt. Nachteilig an oder in dem US-atnentontschen Patent beschriebenen Bremsvorrichtung ist die Tatsache, dass nur relativ wenig Kraft mit den Händen über die Handbremsen auf den Metallhebel ausgeübt werden kann. Der Fahrer sitzt nach vorne geneigt auf dem Schlitten. In der DE 26 36 323 A1 ist ein Schlitten mit am vorderen Ende angeordneten Gleitschuhen, die eine Steuerung des Schlittens sowie gleichseitig ein Bremsen des Schlittens ermöglichen, aufgeführt.

In der US 3,519,284 A ist ein Schlitten offenbart mit einer Bremse, die eine bogenförmige Schwenkbewegung durchführt, wobei die Schwenkebene parallel zur Fahrtrichtung verläuft, wodurch die vom Fahrer mit den Füßen aufgewendete Bremskraft dem direkten Gegendruck der auf den Bremshebei wirkt, ausgesetzt ist.

Aus der DE 84 02 480 U1 ist ein Ski-Schlitten mit ebenfalls vier Kufen bekannt. Der Fahrer sitzt dabei auf einem Sitz in einer liegenden Position.

Aus der EP 0 370 545 A2 ist ein Hochsicherheitsschfitten bekannt, bei dem der Fahrer ebenfalls in einer liegenden Position auf dem Schlitten sitzt. Der Fahrer fasst mit beiden Händen einen Lenker, in dessen Griffbereichen ebenfalls zwei Handbremsen vorgesehen sind, die über Seilzüge einen Bremshebel im hinteren Bereich des vierkufigen Schlittens steuern. Durch Betätigung der Griffe wird der Bremshebel in den Schnee gedrückt. Nachteilig an dieser Bremsvorrichtung ist ebenfalls die relativ geringe Kraftübertragung von den Händen auf die Handbremsen.

Es ist Aufgabe der Erfindung, einen Schlitten gemäß dem Stand der Technik sicherer zu gestalten.

Es ist insbesondere Aufgabe der Erfindung, einen Schlitten mit verbessertem Bremsverhalten zur Verfügung zu stellen.

Und es ist insbesondere Aufgabe der Erfindung, einen Schlitten zur Verfügung zu stellen, dessen Kurvenfahrverhalten gegenüber dem Stand der Technik verbessert wird.

Die Aufgabe wird durch einen eingangs genannten Schlitten gelöst, der die Merkmale des kennzeichnenden Teils des Anspruchs 1 aufweist.

Die erfindungsgemäße Bremseinrichtung weist zwei Pedale auf, die jeweils separat eine Bremsbacke ansteuern. Die Pedale sind im Bereich der Füße des Fahrers angeordnet, wenn der Fahrer in einer normalen Sitzposition auf dem Schlitten sitzt.

Die Bremsbacken sind zwischen einer Fahrstellung und einer Bremsstellung hin und her beweglich. Erfindungsgemäß verläuft die Schwenkbewegung der Bremsbacken zwischen einer Fahrstellung und einer Bremsstellung in einer Schwenkebene, die quer zur Fahrstellung angeordnet ist. Die Bremsbacken sind zwischen einer Fahrstellung und einer Bremsstellung hin und her beweglich. In einer besonders bevorzugten Ausführungsform der erfindungsgemäßen Bremseinrichtung verläuft die Schwenkbewegung der Bremsbacken zwischen einer Fahrstellung und einer Bremsstellung in einer Schwenkebene, die im Wesentlichen senkrecht zur Fahrtrichtung angeordnet ist. Durch die Betätigung der Pedale wird die zugehörige Bremsbacke vorzugsweise über einen zugeordneten Seilzug aus der Fahrstellung, in der sie frei in der Luft schwebt, in eine Bremsstellung verschwenkt, in der einen auch unter hoher Druckbelastung positionsfest mit der Bremsbacke verbundenen Bremsklotz in den Schnee drückt und so eine Bremswirkung durch die Reibung im Schnee hervorruft. Auf die in die Bremsposition verschwenkten Bremsbacken wirkt während des Bremsvorganges eine erhebliche Gegenkraft. Weil die Schwenkebene der Bremsbacke senkrecht zur Fahrrichtung angeordnet ist, wirkt die Gegenkraft der Schwenkbewegung nicht entgegen. Die durch den Bremsvorgang erzeugte Gegenkraft wirkt über die Aufhängung der Bremsbacke am Chassis in das Chassis hinein. Insbesondere wird damit auch keine Gegenkraft in einen Seilzug hinein oder auf die Pedalen erzeugt. Dadurch ist die Bremswirkung besonders effektiv und gut dosierbar.

Vorteilhafterweise ist der Abstand zwischen Pedalen und einer Rückenlehne des Fahrersitzes so bemessen, dass der Fahrer die Pedale bei leicht angewinkelten Beinen mit seinen Füßen betätigen kann und sich dabei gleichzeitig mit dem Rücken an der Rückenlehne abstützt. Dadurch ist eine besonders starke Druckausübung auf die Pedale möglich. Vorteilhafterweise sitzt der Fahrer in einer aufrechten oder eher liegenden Position auf dem Fahrersitz.

Die erfindungsgemäße über Pedale betätigbare Bremseinrichtung ist deutlich sicherer als eine über Handgriffe betätigbare Bremseinrichtung, da zum einen deutlich mehr Kraft durch die Beine und Füße auf die Bremseinrichtung ausgeübt werden kann als durch Zusammendrücken der Hände, und zum anderen stehen die Hände während des erfindungsgemäßen . Bremsvorganges frei für Lenkbewegungen und gleichzeitiger Handbremsbetätigung zur Verfügung.

Vorteilhafterweise sind die Pedale und über jeweils einen zugehörigen Seilzug mit einer zugehörigen Bremsbacke in Wirkverbindung. Die Bremsbacken können vorteilhafterweise an den Kufen, vorzugsweise an den in Fahrtrichtung hinteren Kufen, angeordnet sein, während die vorderen Kufen als Lenkkufen ausgebildet sind. Durch die Anordnung der Bremsbacken an den hinteren beiden Kufen eines mehrkufigen Schlittens wird eine Überschlagbewegung während des Bremsvorganges vorteilhafterweise verhindert.

Vorzugsweise ist eine separat betätigbare Handbremse am Schlitten neben dem Fahrersitz vorgesehen. Die Handbremse wird vom Fahrer mit einer seiner beiden Hände betätigt und kann die Bremswirkung durch die Bremseinrichtung während des Bremsvorganges zusätzlich erhöhen.

Vorteilhafterweise ist die Handbremse mit einem Feststellmechanismus in einer Bremsposition versehen und dabei als eine Sicherheitsfeststellbremse ausgebildet. Dazu kann ein Zahnbogen am Chassis positionsfest montiert sein, in den ein über einen Handmechanismus betätigbarer Arretierzahn zum Feststellen der Handbremse in einer Bremsposition lösbar eingreift. Vorteilhafterweise wird der Feststellmechanismus zum sicheren und positionsstabilen Abstellen des Schlittens auf abschüssigem Gelände benutzt. Es ist aber auch denkbar, die Handbremse während der Fahrt mit dem Schlitten in einer Bremsposition festzustellen, dadurch wird die Fahrgeschwindigkeit insbesondere auf sehr steilen Pisten und bei schneller Fahrt kraftsparend kontrolliert und gemindert.

Vorteilhafterweise ist an je einer in Fahrtrichtung linken und an einer rechten hinteren Kufe eine Bremsbacke vorgesehen. Durch die separate Ansteuerbarkeit der beiden Bremsbacken ist der Schlitten durch die Bremseinrichtung nicht nur bremsbar sondern zusätzlich steuerbar. Durch Betätigen der beispielsweise linken Bremsbacke und gleichzeitigem Nicht-Betätigen der rechten Bremsbacke wird eine besonders enge Linkskurve eingeleitet. Entsprechendes gilt für eine Rechtskurve.

Die Bremseinrichtung kann in verschiedener Art und Weise zusammen mit der Lenkung eingesetzt werden. Bei Lenken nach links und Betätigung der linken Fußbremse wird eine engere Linkskurve gefahren. Beim Lenken nach links und Betätigen der rechten Fußbremse wird eine weitere, aber dafür stabilisierte Linkskurve gefahren. Das Entsprechende gilt natürlich für Rechtskurven.

In einem weiteren Aspekt der Erfindung weist der Fahrersitz eine zwischen einer Einsitzerposition und einer Zweisitzerposition klappbare Rückenlehne auf. Die Rückenlehne ist in der Einsitzerposition aufrecht angeordnet, in der Zweisitzerposition ist sie heruntergeklappt und als Sitzfläche für den Beifahrer im Wesentlichen waagerecht angeordnet.

Bei diesem Aspekt der Erfindung kann der sichere Schlitten zusätzlich für einen Beifahrer durch einfaches Herunterklappen der Rückenlehne des vorderen Fahrersitzes umgebaut werden. Günstigerweise ist zusätzlich am Chassis wenigstens ein weiteres Rückenpolster für den Beifahrer angeordnet.

In einem weiteren Aspekt der Erfindung weisen die Kufen einen Höhenverstellmechanismus für den Kufenabstand zwischen Boden und Chassis auf. Je nach Schneeverhältnissen kann der Abstand der Kufen vom Chassisunterboden und damit der Bodenabstand des Chassis über dem Schnee eingestellt werden. Insbesondere bei weichem Schnee ist ein höherer Bodenabstand und bei härterem Schnee ein geringerer Bodenabstand sinnvoll.

Günstigerweise weist der Höhenverstellmechanismus bezüglich jeder Kufe eine gebogene Aufhängung auf, die etwa mittig in einem Gelenk gegenüber dem Chassis verschwenkbar gelagert ist und an deren einem Ende die Kufe angeordnet ist und an deren anderem Ende eine Arretiervorrichtung vorgesehen ist. Durch Verstellen der Arretiervorrichtung verschwenkt die jeweilige Aufhängung das Gelenk und die an dem anderen Ende angeordnete Kufe führt eine entgegengesetzt gerichtete Bewegung aus, so dass sich dadurch der Abstand zwischen der Kufe und der Chassisunterboden verändert und der Bodenabstand des Schlittens verändert wird.

Die Aufgabe wird insbesondere durch eine Lenkung gelöst, mit der ein Lenkwinkel der Lenkkufen zur Fahrtrichtung veränderbar ist, wobei die Lenkung mit einem integrierten Kippmechanismus gekoppelt ist, der einen Kippwinkel der Lenkkufen um ihre Längsrichtung automatisch mit Veränderung des Lenkwinkels verändert.

Durch die erfindungsgemäße automatische Kopplung der den Lenkwinkel bestimmenden Lenkung und des den Kippwinkel der Lenkkufen bestimmenden Kippmechanismus wird ein besonders stabiles Kurvenfahrverhalten hervorgerufen. Bei starkem Lenkwinkel, d. h. starken Lenkbewegungen, in die eine oder die andere Richtung erzeugt der Kippmechanismus automatisch einen höheren Kippwinkel der Lenkkufen. Dadurch fräst sich die Kante der Lenkkufe während der engen Kurvenfahrt stärker in den Schnee als bei weiteren Kurven und ermöglicht dadurch eine auch bei engen Kurven stabilere Kurvenfahrt.

Vorzugsweise weist die Lenkung ein über eine Lenkstange betätigbares Lenkbauteil auf, das eine während der Kurvenfahrt stärkeren Lenkwinkel, an der kurvenaußenseitigen Lenkkufe erzeugt als der an der kurveninnenseitigen Lenkkufe. In Kombination mit der Kippvorrichtung wird während jeder Kurvenfahrt die jeweilige äußere Lenkkufe stärker gekippt als die jeweilige innere Lenkkufe, wodurch zusätzlich eine sicherere Kurvenfahrt erzeugt wird, ähnlich dem Kurvenfahren beim Skifahren, wo der Außenski stärker angekantet wird als der Innenski.

In einer weiteren Weiterbildung der Erfindung geht von der Lenkkufe eine bezüglich ihrer Längsrichtung schräg gestellte Achse ab, die mit einem angehenden Ende in einem um eine Querachse verschwenkbaren Block angeordnet ist. Der verschwenkbare Block kompensiert einen Neigungswinkel der Lenkkufe in Fahrtrichtung aufgrund der schräg gestellten Achse. Durch eine dem Neigungswinkel entgegen gesetzte Schwenkbewegung ermöglicht es der Block, dass die Lenkkufe über ihre gesamte Längsausdehnung während einer Kurvenfahrt Kontakt mit dem Boden behält.

Die Erfindung wird anhand eines Ausführungsbeispieles in zehn Figuren beschrieben. Dabei zeigen:
- Fig. 1: eine Seitenansicht des erfindungsgemäßen Schlittens,
- Fig. 2: eine Draufsicht des Schlittens in Fig. 1,
- Fig. 3: eine seitliche Ansicht einer Bremsbacke einer erfindungsgemäßen Bremseinrichtung,
- Fig. 4: eine Frontansicht der Bremsbacke in Fig. 3,
- Fig. 5: eine seitliche Ansicht der Aufhängung einer Kufe,
- Fig. 6: eine Frontansicht der Aufhängung in Fig. 5,
- Fig. 7: ein herzförmiges Lenkbauteil,
- Fig. 8: einen Lenkmechanismus in einer Draufsicht,
- Fig. 9: eine seitliche Ansicht des Lenkmechanismus,
- Fig.10: einen Feststellmechanismus der Handbremse.

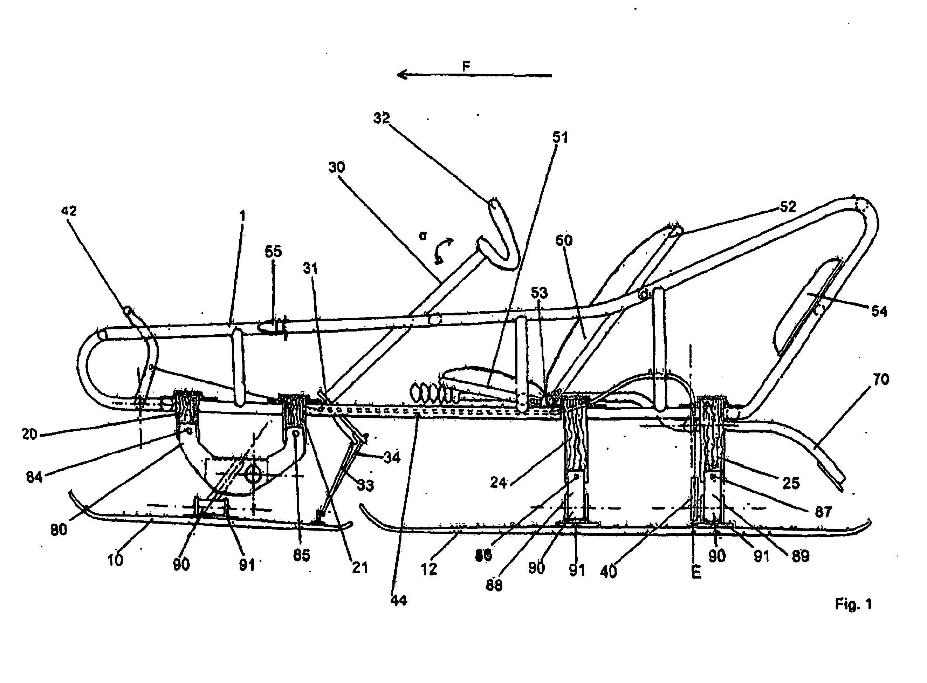

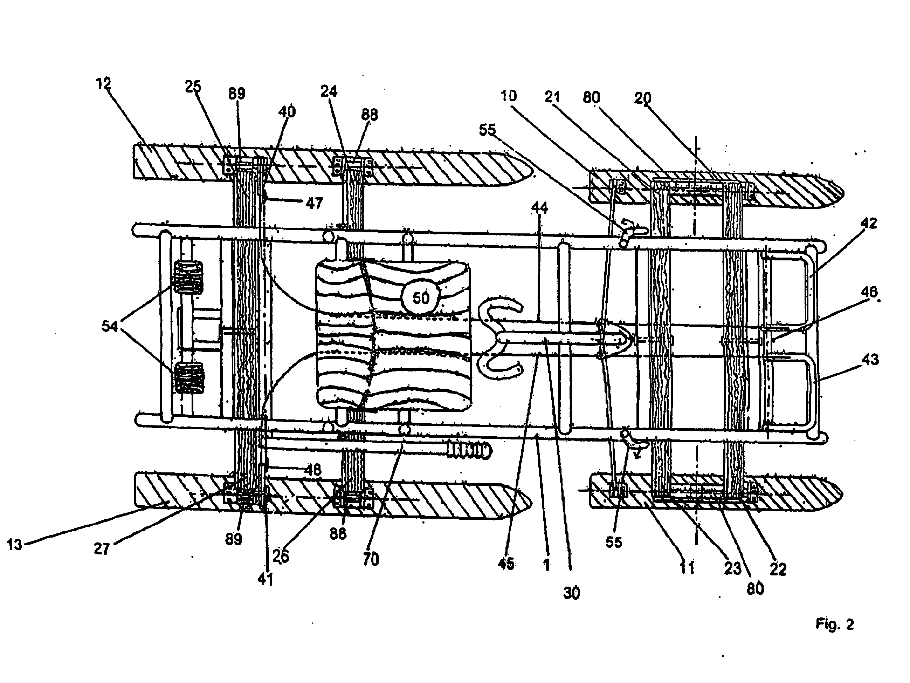

Der in Fig. 1 und Fig. 2 dargestellte Schlitten weist ein aus einem Rohrgestänge gebildetes Chassis 1 auf, an dessen Unterseite vier Kufen 10, 11, 12, 13 an zugehörigen Aufhängungen 20, 21, 22, 23, 24, 25, 26, 27 angeordnet sind. Die in Fahrtrichtung F des Schlittens vorderen beiden Kufen 10, 11 sind über eine Lenkung 30 in einem Lenkwinkel α relativ zum Chassis 1 verstellbar. Die beiden in Fahrtrichtung F hinteren Kufen 12, 13 sind gegenüber dem Chassis 1 positionsfest.

Der in Fig. 1 dargestellte Schlitten weist die erfindungsgemäße Bremseinrichtung auf. Die Bremseinrichtung umfasst an jeder der beiden hinteren Kufen 12, 13 relativ zur ihr verschwenkbar angeordnete Bremsbacken 40. Die Bremseinrichtung wird anhand der in Fahrtrichtung F linken Bremseinrichtungsseite beschrieben. Die rechte Bremseinrichtungsseite ist spiegelbildlich ausgebildet.

Jede der beiden hinteren Kufen 12, 13 ist an jeweils zwei Aufhängungen 24, 25, 26, 27 gegenüber dem Chassis 1 elastisch beweglich montiert. An der in Fahrtrichtung F gesehen rückwärtigen Aufhängung 25 der hinteren Kufe 12 ist die Bremsbacke 40 montiert. Die Bremsbacke 40 ist zwischen einer Fahrstellung FS und einer Bremsstellung BS in einer Ebene, die durch die Schwenkbewegung gebildet wird, beweglich innenseitig der hinteren Kufe 12 angeordnet. Die Schwenkebene E verläuft senkrecht zur Fahrtrichtung F, so dass die Schwenkbewegung in Fig. 1 im Wesentlichen senkrecht zur Zeichenebene auftritt. In Fig.1 befindet sich die Bremsbacke in Fahrstellung FS.

Im Chassis 1 ist ein Sitz 50 für einen Fahrer des Schlittens montiert. Im in Fahrtrichtung F vorderen Bereich des Schlittens sind zwei separat bewegliche Pedale 42, 43 vorgesehen. In einer normalen Sitzstellung des Fahrers auf dem Sitz 50 ruhen seine Füße bei leicht angewinkelten Beinen auf jeweils einem der beiden Pedale 42, 43. Jedes der beiden Pedale 42, 43 ist über einen zugehörigen Seilzug 44, 45 mit einer zugehörigen Bremsbacke 40, 41 verbunden. Die Schwenkbewegung jeder der Bremsbacken 40, 41 ist über den zugehörigen Seilzug 44, 45 durch Treten der Pedale 42, 43 steuerbar.

Die Pedale 42, 43 sind wie das Chassis 1 aus einem Rohrrahmen gefertigt, wie Fig. 2 zeigt. Die beiden Pedale 42, 43 sind im Fußbereich des Chassis 1 nebeneinander drehbar um eine Stange 46 montiert. An einander zugewandten Pedalseiten geht von jedem der Pedale 42, 43 der ihm zugeordnete Seilzug auf etwa mittlerer Höhe ab (Fig. 1). Ein Ende des Seilzugs 44, 45 ist fest mit dem jeweiligen Pedal 42, 43 verbunden und verläuft in einer Schutzhülle geführt unter dem Sitz 50 hindurch. Die beiden Seilzüge 44, 45 sind zwischen Pedal 42, 43 und Sitz 50 im Wesentlichen in Fahrtrichtung F und parallel zueinander geführt. Unter dem Sitz 50 winkeln die beiden Seilzüge 44, 45 in einem Bogen senkrecht zur Fahrtrichtung F in entgegen gesetzte Richtungen ab

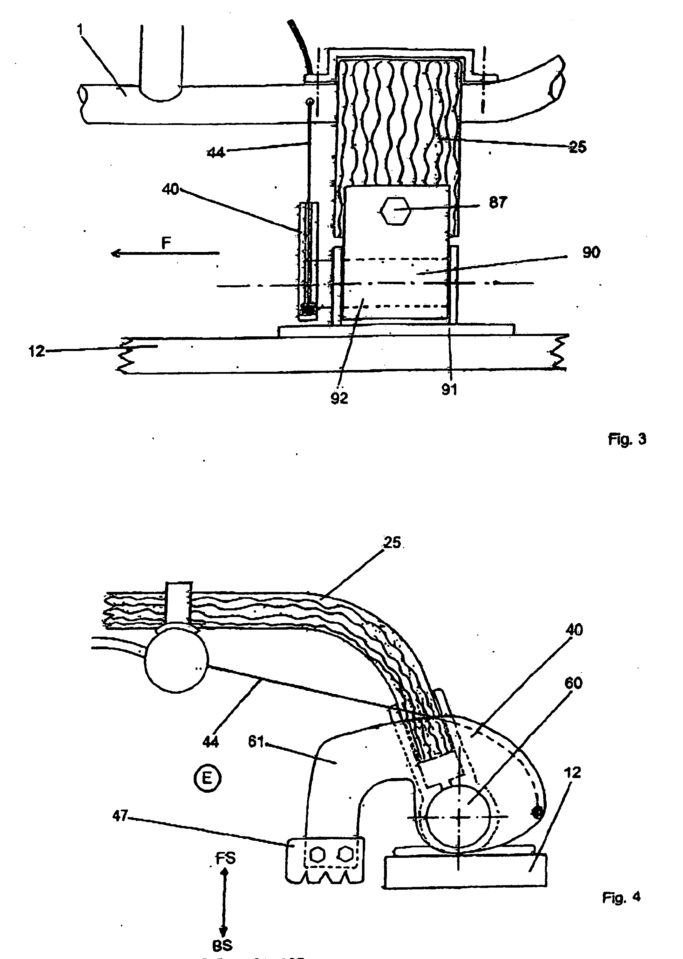

Fig. 2 zeigt die an der vorlaufenden Seite der rückwärtigen Aufhängung 25, 27 der beiden hinteren Kufen 12, 13 schwenkbar angeordneten Bremsbacken 40, 41, die durch Treten des zughörigen Pedals 42, 43 in einer Ebene senkrecht zur Fahrtrichtung F verschwenkt werden. Die Bremsbacke 40 weist gemäß Fig. 4 einen die eigentliche Bremswirkung entfaltenden Bremsblock 47 auf. Die Schwenkbewegung erfolgt dabei im Wesentlichen bogenförmig aus einer Fahrposition FS wie sie in Fig. 4 dargestellt ist, in der der Bremsblock 47 oberhalb der Kufe 12 angeordnet ist, in eine Bremsstellung BS, in der der Bremsblock 47, 48 unterhalb der Kufe 12, 13 verschwenkt wird. Dazu wird das Pedal 42, 43 vom Fahrer weggedrückt, der Seilzug 44 wird, wie Fig. 1 zeigt, angezogen und der Bremsblock 47 durch den in Fig. 4 gezeigten Schwenkmechanismus in einer Schwenkbewegung entgegen dem Uhrzeigersinn in die Bremsstellung BS gedrückt. Der Bremsblock 47 wird während der Fahrt so in die Schneeauflage gedrückt und erzeugt durch die Reibung im Schnee eine außerordentlich starke Bremswirkung.

Fig. 3 und Fig. 4 zeigen den Schwenkmechanismus der Bremsbacken 40, 41 in einer seitlichen Ansicht in Fig. 3 und in einer Frontansicht in Fig. 4. Fig. 3 zeigt die Kufe 12, die über die Aufhängung 25 elastisch beweglich am Chassis 1 montiert ist. Die Aufhängung 25 dient auch als Stoßdämpfer. Die Bremsbacke 40 ist schwenkbar an der vorlaufenden Stirnfläche der hinteren Aufhängung 25 montiert. Die Bremsbacke 40 weist ein Rohrstück 60 auf, das in eine ihr angepassten rohrförmige Aufnahme der Aufhängung 25 hinein ragt und in der Aufhängung 25 drehbar um eine Achse in Fahrtrichtung F gelagert ist. Am in Fahrtrichtung F vorderen aus der Aufhängung 25 heraus ragenden Ende des Rohrstücks 60 ist ein hakenförmiger Arm 61 montiert, an dessen freiem Ende der Bremsblock 47 positionsfest angeschraubt ist. Die Bremsbacke 40 weist eine (nicht eingezeichnete) Rückstellfeder auf, der die Bremsbacke 40 bei Nicht-Betätigung des zugeordneten Pedals 42 in Fahrstellung FS zieht.

Durch Treten des Pedals 42 wird der Seilzug 44 gemäß Fig. 4 angezogen und die Bremsbacke 40 macht eine Bewegung entgegen dem Uhrzeigersinn in der Schwenkebene E, die parallel zur Zeichenebene liegt und der Bremsklotz 47 wird dadurch in den Schnee in die Bremsstellung BS gedrückt. In der Bremsstellung BS erfährt der Bremsklotz 47 eine erhebliche Gegenkraft entgegen der Fahrtrichtung F. Da die Schwenkebene E jedoch senkrecht zur Fahrtrichtung F liegt, wird die durch die Bremsung entstehende Gegenkraft ausschließlich in die Aufhängung 25 bzw. das Chassis 1 gelenkt, insbesondere wird keine Gegenkraft in den Seilzug ausgeübt.

Weil die beiden Bremsbacken 40, 41 gemäß Fig. 2 separat betätigbar sind, kann der Schlitten separat an der linken oder rechten Fahrseite gebremst werden, wodurch eine zusätzliche Steuerungsmöglichkeit besteht. Das Fahrverhalten des Schlittens wird durch die separat von der Bremseinrichtung am Schlitten vorgesehene Handbremse 70, die in Fig. 1 und Fig. 2 zu sehen ist, insbesondere bei schneller Fahrt stabilisiert.

In Fig. 1 ist der Fahrersitz 50 etwa mittig in Fahrtrichtung F innerhalb des Chassis 1 angeordnet. Der Fahrersitz 50 weist eine Sitzfläche 51 und eine Rückenlehne 52 auf. Die Rückenlehne 52 des Fahrersitzes 50 ist über ein Gelenk 53 in eine beinahe waagerechte Position klappbar. In der in Fig. 1 dargestellten hochgeklappten Position der Rückenlehne 52 ist der Schlitten als Einsitzer ausgelegt. In der nicht dargestellten herunter geklappten Position dient die herunter geklappte Rückenlehne 52 als Sitzfläche für einen Beifahrer. Der Beifahrer kann sich zusätzlich an den separat für ihn vorgesehenen beiden Beisitzerrückenlehnen 54 anlehnen.

An einer oberen Rahmenstange des Chassis 1 sind an der in Fahrtrichtung linken und rechten Chassisseite Fußrasten 55 montiert. In der Einsitzerposition sind die Fußrasten 55 an die Rahmenstange geklappt, um wenig Luftwiderstand zu bieten. In der Zweisitzerposition sind die Fußrasten 55 ausgeklappt, um ein Auflagefläche für die Füße oder Unterschenkel des Beisitzers zur Verfügung zu stellen.

Die vier Aufhängungen 20, 21, 24, 25 in Fig. 1 für die beiden in Fahrtrichtung F linken Kufen 10, 12 weisen jeweils einen (nicht eingezeichneten) Höhenverstellmechanismus auf.

Die Aufhängungen 20, 21 24, 25 sind, wie in Fig. 4 dargestellt, als in ihrer Längsrichtung zum Boden hin gebogene Leisten ausgebildet, an deren einem Ende die jeweilige Kufe 10, 12 montiert ist und an deren anderem Ende jeweils eine Arretiervorrichtung vorgesehen ist. Die Aufhängung 20, 21 24, 25 ist in ihrer Längsrichtung etwa mittig am Chassis 1 in Fig. 4 in einer Gummimuffe beweglich gelagert. Durch Auf- und Abbewegen des Arretierendes der Aufhängung 20, 21 24, 25 bewegt sich die am anderen Ende der Aufhängung 20, 21 24, 25 angeordnete Kufe 10, 12 entgegengesetzt ab und auf. Durch die Arretiervorrichtung ist die Höhe des Chassis 1 zum Boden gestuft einstellbar.

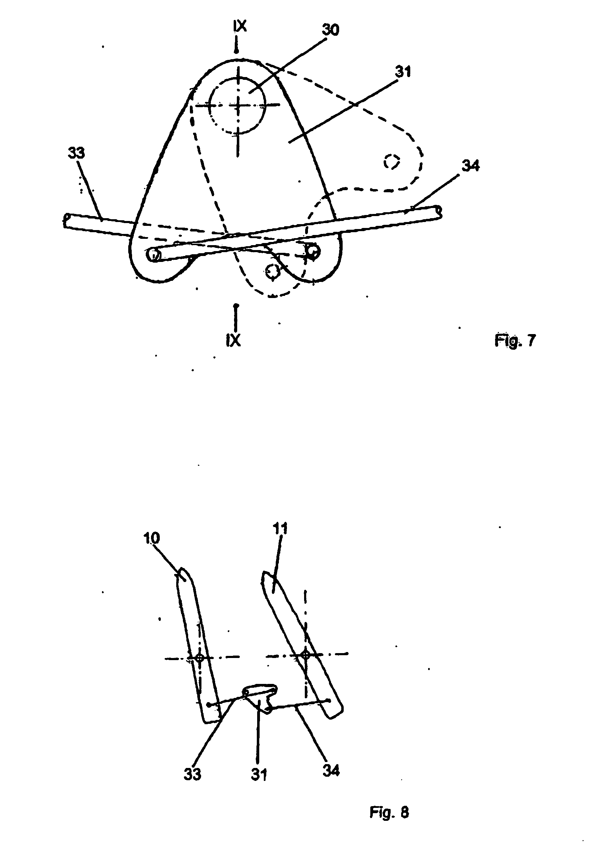

Fig. 1 zeigt eine Lenkung 30 für die in Fahrrichtung F vorderen beiden Kufen 10, 11. Die Lenkstange 30 ist in einer im Wesentlichen herzförmigen, drehbar gegenüber den Chassis 1 gelagerten Lenkplatte 31 befestigt. Die Lenkplatte 31 ist in Fig. 7 dargestellt. Die Lenkplatte 31 und die Lenkstange 30 sind drehfest miteinander verbunden. Durch Drehen der Lenkstange 30 mittels eines Lenkers 32 dreht sich die herzförmige Lenkplatte 31 in Fig. 7 entsprechend der Drehbewegung der Lenkstange 30.

In Fig. 7 ist die Lenkstange 30 im oberen in einem durch einen Kreis bezeichneten Bereich an der herzförmigen Lenkplatte 31 drehfest montiert. An den unteren beiden Enden der Lenkplatte 31 sind zwei gekreuzte Verbindungsstangen 33, 34 zur gegenüber liegenden Kufe 10, 11 geführt. Die Verbindungsstangen 33, 34 sind azentrisch zum Drehpunkt der Lenkplatte 31 an der Lenkplatte 31 beweglich montiert.

Fig. 8 zeigt die Stellung des Lenkstückes 31 bei einer Linksbewegung des Lenkers 32, die eine Linkskurvenfahrt einleitet. Durch die azentrische Befestigung der Verbindungsstangen 33, 34 ist die Wegstrecke senkrecht zur Fahrtrichtung F der linken und rechten Verbindungsstange 33, 34 unterschiedlich groß, was zu einer unterschiedlich starken Ausbildung des Kurvenwinkels der Lenkkufen 10, 11 führt. Die äußere Lenkkufe 11 kantet stärker an als die innere Lenkkufe 12 und drückt so den Schlitten in die gewünschte Fahrtrichtung F - wie beim Skifahren.

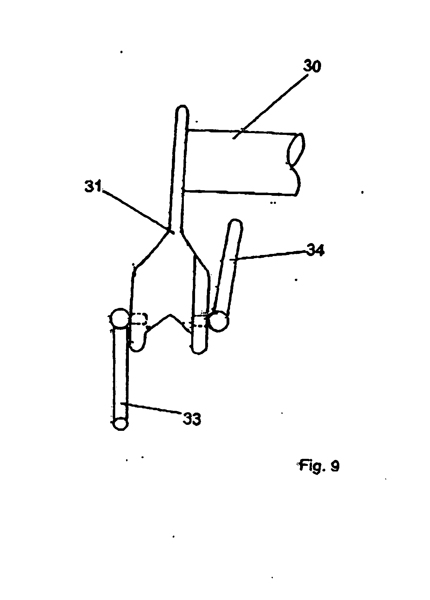

Fig. 9 zeigt eine Schnittansicht entlang der Linie IX-IX in Fig. 7.

Zusätzlich zu den unterschiedlichen Kurvenwinkeln von innerer und äußerer Lenkkufe 10, 11 kippen die Lenkkufen 10, 11 während der Kurvenfahrt unterschiedlich stark um ihre eigene Längsachse. Die Außenkufe 11 weist in der Kurvenfahrt einen stärkeren Kippwinkel auf als die Innenkufe 10.

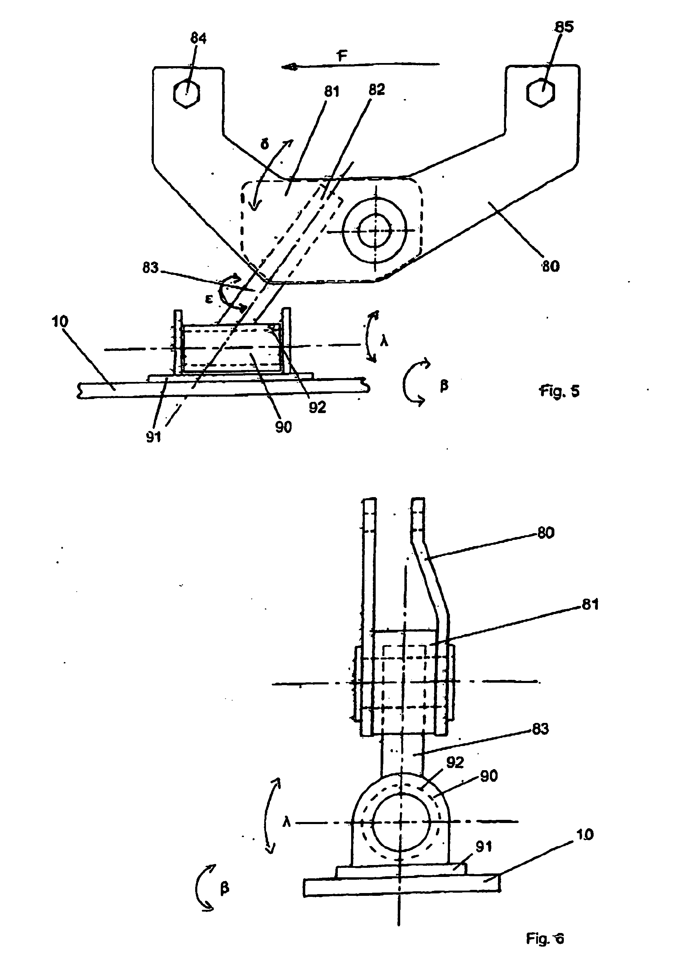

Der Kippmechanismus, der diese unterschiedlichen Kippwinkel bewirkt, ist in Fig. 5 und Fig. 6 für die linke Lenkkufe 10 dargestellt. Der Kippmechanismus ist spiegelbildlich für die rechte Lenkkufe 11 ausgeformt. Fig. 5 zeigt eine u-förmige Halterung 80, die an den beiden vorderen Aufhängungen 20, 21 der linken Lenkkufe 10 beweglich montiert ist. Die u-förmige Halterung 80 ist an den Aufhängungen 20, 21 mit zwei quer zur Fahrtrichtung F angeordneten Bolzen 84, 85 um Bolzenlängsachsen drehbar montiert.

Die Halterung 80 weist einen um einen Drehwinkel δ drehbar um eine senkrecht zur Fahrrichtung F angeordnete Drehachse gelagerten Block 81 auf. Der Block 81 enthält eine schräg gestellte Aussparung 82 für einen Dorn 83, der von der vorderen Lenkkufe 10 in Fahrtrichtung F schräg nach hinten abgeht. Der Dorn 83 ist in der Aussparung 82 um die schräg gestellte Dornachse um einen weiteren Drehwinkel ε drehbar gelagert. Während einer Rechtskurvenfahrt dreht sich die in Fig. 5 eingezeichnete linke Lenkkufe 10 nach rechts, d. h. das vordere Kufenende ragt in die Zeichenebene hinein und das hintere Kufenende ragt aus der Zeichenebene hinaus. Durch die Lenkbewegung der Lenkkufe 10 würde sich der vordere Kufenabschnitt der Lenkkufe 10 aufgrund des schräg gestellten Dorns 83 nach unten und das hintere Kufenende nach oben bewegen. Da der Schlitten jedoch fest auf dem Schnee steht, wird diese Bewegung kompensiert durch eine Drehbewegung entlang des Drehwinkels δ im Uhrzeigersinn des Blockes 81 um seine Drehachse. Der Block 81 würde somit um den Drehwinkel δ in einer Rechtskurve ein Stück weit im Uhrzeigersinn gedreht werden und die Lenkkufe 10 würde entlang ihrer gesamten Innenkantenlänge auf dem Schnee aufliegen können. Aufgrund der Schrägstellung des Dorns 83 kippt die Lenkkufe 10 jedoch in Fahrtrichtung F auch ein Stück weit mit dem Uhrzeigersinn um den Kippwinkel β. Der Kippwinkel β ist je größer, desto größer der Drehwinkel ε des Dornes 83 ist bzw. der Lenkwinkel α ist. Das hat zur Folge, dass die äußere Lenkkufe 10 stärker angekantet ist als die innere Lenkkufe 11.

Neben dem variablen Kippwinkel β sind die Kufen 10, 11, 12, 13 gemäß Fig.5 jeweils durch einen Neigungswinkelmechanismus um einen Neigungswinkel λ für eine Abfahrt fest einstellbar. Die Lenkkufen 10, 11 sind an ihrer Oberseite jeweils mit einer gabelförmigen Aufnahme 91 versehen, zwischen deren Gabelzinken eine Achse 90 ihnen gegenüber positionsfest montiert ist. Um die Achse 90 ist eine Klemmmanschette 92 gespannt, von der der Dorn 83 abgeht. Die Klemmmanschette 92 ist auf der Achse 90 in der gabelförmigen Aufnahme 91 in kontinuierlich wählbaren Stellungen festschraubbar, so dass der Dorn 83 je nach Stellung in unterschiedlichen Winkeln quer zur Längsrichtung der Kufe 10, 11 abgeht und damit den Neigungswinkel λ der Kufe gegenüber dem Boden während einer gesamten Abfahrt bestimmt. Dem Neigungswinkel λ der Kufe 10, 11, 12, 13 überlagert ist der veränderliche Kippwinkel β, der sich je nach Steilheit der Kurve verändert.

An den hinteren Kufen 12, 13 sind jeweils zwei gabelförmige Halterungen 91 vorgesehen, zwischen den beiden Zinken der Gabel ist jeweils eine Achse 90 fest montiert, auf die eine Klemmmanschette 92 drehbar geklemmt ist, die mit der zugehörigen Aufhängung 24, 25, 26, 27 verbunden ist. Die Verbindung zwischen Klemmmanschette 92 und der Aufhängung 24, 25, 26, 27 erfolgt dabei jedoch in beweglicher Weise ebenfalls über jeweils einen Bolzen 86, 87.

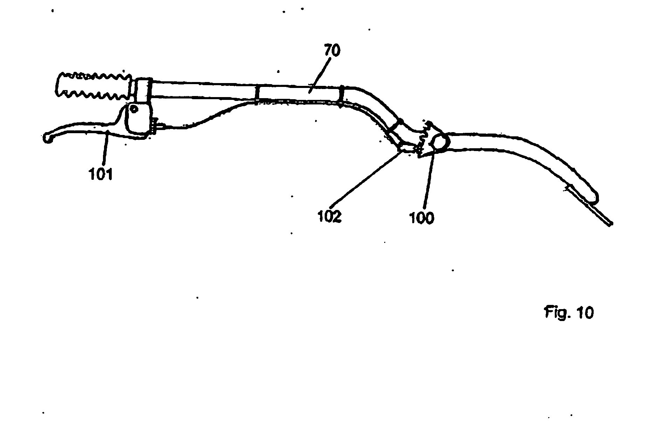

Fig. 10 zeigt einen Feststellmechanismus der Handbremse 70. Der Feststellmechanismus weist einen Zahnbogen 100 auf, der fest mit dem Chassis 1 in Verbindung steht. In den Zahnbogen 100 greift ein Arretierstift 102 ein, der über einen Handmechanismus 101 gesteuert vor- und zurückschiebbar ist. Durch Anziehen des Handmechanismus 101 fährt der Arretierstift 102 in Fig. 10 in die linke Richtung und löst sich aus dem Zahnbogen 100. Die Handbremse 70 wird damit um die Drehachse, die durch einen Kreis gekennzeichnet ist, schwenkbar. Durch Loslassen des Handmechanismus 101 rastet der Arretierstift 102 zwischen zwei Zähne des Zahnbogens 101 ein und stellt die Handbremse 70 gegenüber dem Chassis 1 ggf. in einer Bremsstellung fest. Dadurch wird ein Verrutschen des Schlittens auf abschüssigem Gelände verhindert.

### Bezugszeichenliste:

- 1: Chassis
- 10, 11,: Lenkkufen
- 12, 13: hintere Kufen
- 20, 21, 22, 23: Aufhängungen
- 24, 25, 26, 27: Aufhängungen
- 30: Lenkvorrichtung / Lenkstange
- 31: Lenkplatte
- 32: Lenker
- 33, 34: gekreuzte Verbindungsstangen
- 40, 41: Bremsbacken
- 42, 43: Pedale
- 44,45: Seilzug
- 47,48: Bremsblock
- 50: Fahrersitz
- 51: Sitzfläche
- 52: Rückenlehne
- 53: Gelenk
- 54: Beisitzerrrückenlehne
- 55: Fußrasten
- 70: Handbremse
- 80: u- förmige Halterung
- 81: Block
- 82: Aussparung
- 83: Dorn
- 84, 85, 86, 87: Bolzen
- 90: Achse
- 91: gabelförmige Halterung
- 92: Klemmmanschette
- 100: Zahnbogen
- 101: Handmechanismus
- 102: Arretierstift
- BS: Bremsstellung
- E: Schwenkebene
- F: Fahrtrichtung
- FS: Fahrstellung
- α: Lenkwinkel
- β: Kippwinkel
- δ: Drehwinkel des Blocks
- ε: weiterer Drehwinkel des Dorns
- λ: Neigungswinkel

## Patentansprüche

1. Schlitten für wenigstens einen Fahrer mit
einem Chassis (1) mit mehreren Kufen (10, 11, 12, 13) und mit einer Bremseinrichtung mit wenigstens zwei separat ansteuerbaren, zwischen einer Fahrstellung (FS) und einer Bremsstellung (BS) hin und her beweglichen Bremsbacken (40, 41), und mit zwei Pedalen (42, 43), die jeweils separat eine der Bremsbacken (40, 41) ansteuem, wobei die zwei Pedale (42, 43) im Bereich der Füße des auf dem Schlitten
sitzenden Fahrers angeordnet sind, **dadurch gekennzeichnet, dass** eine Schwenkbewegung jeder der Bremsbacken (40, 41) zwischen Fahrstellung (FS) und Bremsstellung (BS) eine Schwenkebene bildet, die im Wesentlichen senkrecht zur Fahrtrichtung (F) angeordnet ist.

2. Schlitten nach Anspruch 1,
**dadurch gekennzeichnet, dass** jeder Bremsbacke (40, 41) genau ein Pedal (42, 43) zugeordnet ist und das Pedal (42, 43) die Bremsbacke (40, 41) über einen zugehörigen Seilzug (44, 45) steuert.

3. Schlitten nach Anspruch 1 oder 2,
**dadurch gekennzeichnet dass** die Bremsbacken (40, 41) an den Kufen (10, 11, 12, 13) angeordnet sind.

4. Schlitten nach Anspruch 1,
**gekennzeichnet durch** eine Handbremse (70), die separat zu den Bremsbacken (40, 41) ansteuerbar und mit Hilfe einer der Hände des Fahrers betätigbar ist.

5. Schlitten nach Anspruch 4,
**gekennzeichnet durch** einen Fertstellmechanismus für die Handbremse (70) in einer Bremsposition.

6. Schlitten nach Anspruch 1,
**dadurch gekennzeichnet, dass** ein Sitz (50) für den Fahrer eine zwischen einer Einsitzerposition und einer Zweisitzerposition klappbare Rückenlehne (52) aufweist und die Rückenlehne (51) in der Einsikerposition aufrecht angeordnet ist und in der Zweisitzerposition als Sitzfläche für einen Beifahrer im Wesentlichen waagerecht zum Boden heruntergeklappt ist.

7. Schlitten nach Anspruch 1,
**dadurch gekennzeichnet, dass** die Kufen (10, 11, 12, 13) einen Höhenverstellmechanismus für einen Bodenabstand des Chassis (1) aufweisen.

8. Schlitten nach Anspruch 7,
**dadurch gekennzeichnet, dass** der Höhenverstellmechanismus bezüglich jeder Kufe (10, 11, 12, 13) eine gebogene Aufhängung (20, 21, 22, 23, 24, 25, 26, 27) aufweist, die etwa mittig gegenüber dem Chassis (1) verschwenkbar gelagert ist, an deren einem Ende die Kufe (10, 11, 12, 13) angeordnet ist und an deren anderem Ende eine Arretiervorrichtung vorgesehen ist.

9. Schlitten nach Anspruch 1,
**gekennzeichnet durch** eine Lenkung (30) mit der ein Kurvenwinke (α) der Lenkkufen (10, 11) veränderbar ist und einen Kippmechanismus, der einen Kippwinkel (β) der Lenkkufen (10, 11) automatisch mit Veränderung des Kurvenwinkels (α) verändert.

10. Schlitten nach Anspruch 9,
**dadurch gekennzeichnet, dass** von der Lenkkufe (10, 11) ein schräg gesteltter Dorn (83) abgeht, der um einen weiteren Drehwinkel (ε) drehbar in einem um einen Drehwinkel (δ) verschwenkbaren Block (81) angeordnet ist.

11. Schlitten nach Anspruch 9 oder 10,
**dadurch gekennzeichnet, dass** gegenüberliegende Lenkkufen (10, 11) in einer Kurvenfahrt unterschiedlich stark um den Kippwinkel (β) kippen.

12. Schlitten nach Anspruch 11,
**dadurch gekennzeichnet, dass** die eine äußere Lenkkufe (10, 11) stärker gekippt ist als eine innere Lenkkufe (10, 11).

13. Schlitten nach einem der Ansprüche 9, 10, 11 oder 12,
**gekennzeichnet durch** Halterungen (80, 88, 89) für zugehörige Kufen (10, 11, 12, 13) und die Halterungen (80, 88, 89) sind beweglich an zugehörigen Aufhängungen (20, 21, 22, 23, 24, 25, 26, 27) montiert.

14. Schlitten nach Anspruch 13,
**gekennzeichnet durch** wenigstens einen Bolzen (84, 85, 86, 87), mit dem jede der Halterungen (80, 88, 89) an der zugehörigen wenigstens einen Aufhängung (20, 21, 22, 23, 24, 25, 26, 27) um eine Bolzenlängsachse drehbar montiert ist.

15. Schlitten nach Anspruch 1,
**gekennzeichnet durch** einen jeder Kufe (10, 11, 12, 13) zugeordneten Neigungswinkeleinstellmechanismus zum Einstellen des Neigungswinkel (λ) jeder Kufe (10, 11, 12, 13).

## Claims

1. Sledge for at least one driver with
a chassis (1) with a plurality of runners (10, 11, 12, 13) and with a brake device with at least two brake shoes (40, 41) capable of being actuated separately and movable in a reciprocating manner between a travel position (FS) and a braking position (BS), and with
two pedals (42, 43) which control one of the brake shoes (40, 41) separately in each case,
wherein the two pedals (42, 43) are arranged in the region of the feet of the driver sitting on the sledge, **characterized in that**
a pivoting movement of each of the brake shoes (40, 41) between the travel position (FS) and the braking position (BS) forms a pivoting plane which is arranged substantially at a right angle to the direction of travel (F).

2. Sledge according to Claim 1, **characterized in that** each brake shoe (40, 41) has associated with it exactly one pedal (42, 43), and the pedal (42, 43) controls the brake shoe (40, 41) by way of a respective cable pull (44, 45).

3. Sledge according to Claim 1 or 2, **characterized in that** the brake shoes (40, 41) are arranged on the runners (10, 11, 12, 13).

4. Sledge according to Claim 1, **characterized by** a hand brake (70) which is capable of being controlled separately from the brake shoes (40, 41) and is capable of being actuated with the aid of one of the driver's hands.

5. Sledge according to Claim 4, **characterized by** a locking mechanism for the hand brake (70) in a braking position.

6. Sledge according to Claim 1, **characterized in that** a seat (50) for the driver has a backrest (52) capable of being folded between a single-seater position and a double-seater position, and the backrest (51) is arranged upright in the single-seater position and is folded down substantially horizontally to the ground as a seat area for a passenger in the double-seater position.

7. Sledge according to Claim 1, **characterized in that** the runners (10, 11, 12, 13) have a vertical adjustment mechanism for the ground clearance of the chassis (1).

8. Sledge according to Claim 7, **characterized in that** with respect to each runner (10, 11, 12, 13) the vertical adjustment mechanism has a curved suspension means (20, 21, 22, 23, 24, 25, 26, 27) which is mounted approximately centrally so as to be pivotable with respect to the chassis (1) and on one end of which the runner (10, 11, 12, 13) is arranged and on the other end of which a locking apparatus is provided.

9. Sledge according to Claim 1, **characterized by** a steering means (30) with which a curve angle (α) of the steering runners (10, 11) is capable of being changed, and a tilting mechanism which automatically changes a tilting angle (β) of the steering runners (10, 11) with change in the curve angle (α).

10. Sledge according to Claim 9, **characterized in that** an obliquely set mandrel (83), which is arranged so as to be rotatable by a further angle of rotation (ε) in a block (81) pivotable by an angle of rotation (δ), starts from the steering runner (10, 11).

11. Sledge according to Claim 9 or 10, **characterized in that** opposed steering runners (10, 11) tilt to differing degrees about the tilting angle (β) when cornering.

12. Sledge according to Claim 11, **characterized in that** one outer steering runner (10, 11) is tilted to a greater degree than an inner steering runner (10, 11).

13. Sledge according to one of the Claims 9, 10, 11 or 12, **characterized by** retaining means (80, 88, 89) for respective runners (10, 11, 12, 13), and the retaining means (80, 88, 89) are mounted so as to be movable on respective suspension means (20, 21, 22, 23, 24, 25, 26, 27).

14. Sledge according to Claim 13, **characterized by** at least one pin (84, 85, 86, 87) by which each of the retaining means (80, 88, 89) is mounted on the respective at least one suspension means (20, 21, 22, 23, 24, 25, 26, 27) so as to be rotatable about a longitudinal axis of the pin.

15. Sledge according to Claim 1, **characterized by** a mechanism of setting the angle of inclination - associated with each runner (10, 11, 12, 13) - for setting the angle of inclination (A) of each runner (10, 11, 12, 13).

## Revendications

1. Luge pour au moins un lugeur avec
un châssis (1) avec plusieurs patins (10, 11, 12, 13) et avec un dispositif de freinage avec au moins deux mâchoires de frein (40, 41) pouvant être commandées séparément, mobiles en va-et-vient entre une position de conduite (FS) et une position de freinage (BS), et avec deux pédales (42, 43) qui commandent chacune séparément l'une des mâchoires de frein (40, 41), les deux pédales (42, 43) étant placées dans la zone des pieds du lugeur qui est assis sur la luge,
**caractérisée en ce**
**qu'**un mouvement de pivotement de chacune des mâchoires de frein (40, 41) entre la position de conduite (FS) et la position de freinage (BS) forme un plan de pivotement qui est placé sensiblement perpendiculairement au sens de la marche (F).

2. Luge selon la revendication 1,
**caractérisée en ce qu'**exactement une pédale (42, 43) est affectée à chaque mâchoire de frein (40, 41) et la pédale (42, 43) commande la mâchoire de frein (40, 41) par un tirant à câble qui lui est associé (44, 45).

3. Luge selon la revendication 1 ou 2,
**caractérisée en ce que** les mâchoires de frein (40, 41) sont placées sur les patins (10, 11, 12, 13).

4. Luge selon la revendication 1,
**caractérisée par** un frein à main (70) qui peut être commandé séparément des mâchoires de frein (40, 41) et qui peut être actionné à l'aide de l'une des mains du lugeur.

5. Luge selon la revendication 4,
**caractérisée par** un mécanisme de blocage pour le frein à main (70) dans une position de freinage.

6. Luge selon la revendication 1,
**caractérisée en ce qu'**un siège (50) pour le lugeur présente un dossier (52) qui peut être rabattu entre une position monoplace et une position biplace et que le dossier (51) est placé debout dans la position monoplace et est rabattu dans la position biplace, comme surface de siège pour un passager, sensiblement horizontalement par rapport au fond.

7. Luge selon la revendication 1,
**caractérisée en ce que** les patins (10, 11, 12, 13) présentent un mécanisme de réglage en hauteur pour une distance par rapport au fond du châssis (1).

8. Luge selon la revendication 7,
**caractérisée en ce que** le mécanisme de réglage en hauteur présente, par rapport à chaque patin (10, 11, 12, 13), une suspension recourbée (20, 21, 22, 23, 24, 25, 26, 27) qui est positionnée pivotante par rapport au châssis (1) à peu près au milieu, suspension à l'une des extrémités de laquelle le patin (10, 11, 12, 13) est placé et à l'autre extrémité de laquelle un dispositif d'arrêt est prévu.

9. Luge selon la revendication 1,
**caractérisée par** une direction (30), avec laquelle un angle de braquage (α) des patins de direction (10, 11) peut être varié, et par un mécanisme de basculement qui modifie automatiquement un angle de basculement (β) des patins de direction (10, 11) avec la variation de l'angle de braquage (α).

10. Luge selon la revendication 9,
**caractérisée en ce qu'**un mandrin incliné (83), qui est placé dans un bloc (81) pivotant autour d'un angle de rotation (∂) en étant rotatif autour d'un autre angle de rotation (ε), part du patin de direction (10, 11).

11. Luge selon la revendication 9 ou 10,
**caractérisée en ce que** des patins de direction opposés (10, 11) basculent, lors de la négociation d'un virage, de manière différemment forte autour de l'angle de basculement (β).

12. Luge selon la revendication 11,
**caractérisée en ce que** l'un des patins de direction extérieurs (10, 11) est plus fortement basculé qu'un patin de direction intérieur (10, 11).

13. Luge selon une des revendications 9, 10, 11 ou 12,
**caractérisée par** des supports (80, 88, 89) pour des patins associés (10, 11, 12, 13) et les supports (80, 88, 89) sont montés mobiles sur des suspensions associées (20, 21, 22, 23, 24, 25, 26, 27).

14. Luge selon la revendication 13,
**caractérisée par** au moins un boulon (84, 85, 86, 87) avec lequel chacun des supports (80, 88, 89) est monté sur la suspension associée qui existe au moins (20, 21, 22, 23, 24, 25, 26, 27) en étant rotatif autour d'un axe longitudinal du boulon.

15. Luge selon la revendication 1,
**caractérisée par** un mécanisme de réglage d'angle d'inclinaison affecté à chaque patin (10, 11, 12, 13) pour le réglage de l'angle d'inclinaison (λ) de chaque patin (10, 11, 12, 13).
